# EUROPÄISCHE PATENTSCHRIFT

(11) **EP 3 677 537 B1**
(45) Veröffentlichungstag und Bekanntmachung des Hinweises auf die Patenterteilung: **13.12.2023**
(21) Anmeldenummer: 19219441.3
(22) Anmeldetag: 23.12.2019
(51) Int. Cl.: B66C 9/04, B66F 19/00, F03D 13/10, F03D 13/20, B23P 19/06, B25B 29/02, B66C 23/18

(54) **HEBE- UND TRANSPORTVORRICHTUNG**
LIFTING AND TRANSPORTING DEVICE
DISPOSITIF DE LEVAGE ET DE TRANSPORT

(30) Priorität: 04.01.2019 DE 102019200042
(43) Veröffentlichungstag der Anmeldung: 08.07.2020
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Paustian, Othmar

(56) Entgegenhaltungen:
- EP-A2- 2 660 182
- WO-A1-2016/193297
- DE-A1-102012 009 255
- JP-A- H08 122 479
- JP-A- H09 295 230
- KR-A- 20130 026 039

## Beschreibung

Die Erfindung bezieht sich auf eine Hebe- und Transportvorrichtung gemäß dem Oberbegriff von Anspruch 1.

Unter dem Vorspannen einer Schraubverbindung wird im Rahmen dieser Anmeldung sowohl ein reibungs- und torsionsfreies Vorspannen, bei dem ausschließlich eine Zugkraft auf den Schraubenbolzen aufgebracht und die Schraubenmutter anschließend beigedreht wird, als auch ein drehendes Vorspannen - z. B. nach dem Drehmoment- oder dem Drehwinkelverfahren - verstanden.

Dementsprechend werden im Rahmen dieser Anmeldung unter Spannwerkzeugen sowohl Zug aufbringende Spannwerkzeuge, z. B. Schraubenspannzylinder, als auch drehende Spannwerkzeuge, z. B. Drehmomentschrauber oder Drehschrauber, verstanden, wobei die Spannwerkzeuge automatische oder auch manuelle Spannwerkzeuge sein können.

Ferner wird dementsprechend unter einer Spannstellung eine Stellung bzw. Position eines Spannwerkzeuges verstanden, in der es eine Schraubverbindung vorspannen kann.

Unter Lastraum wird im Rahmen dieser Anmeldung der von der anzuhebenden bzw. zu transportierenden Last eingenommene Raum verstanden.

Eine gattungsgemäße Hebe- und Transportvorrichtung ist aus der DE 10 2012 009 255 A1 bekannt. Mit einer solchen Vorrichtung können Schraubverbindungen in Flanschverbindungen bequem vorgespannt werden. Dazu wird der Schraubenbolzen von unten durch die miteinander fluchtenden Durchgangsbohrungen in den miteinander zu verbindenden Bauteilen gesteckt, bis der Bolzenkopf an der Flansch-Unterseite der zu verbindenden Bauteile anliegt. Auf der Flansch-Oberseite wird auf das mit einem Gewinde versehene Bolzenende eine Mutter per Hand aufgeschraubt, bis sie an der Flansch-Oberseite anliegt. Ein Schraubenspannzylinder ist über der Flansch-Oberseite in der Hebe- und Transportvorrichtung gehaltert und wird über der vorzuspannenden Schraubverbindung positioniert und dann auf diese abgesenkt. Nach erfolgtem Vorspannen der Schraubverbindung wird der Schraubenspannzylinder mittels der Hebe- und Transportvorrichtung wieder angehoben und zur nächsten Schraubverbindung verschoben.

Die JP H09 295230 A offenbart einen anhebbaren Rahmen, der auf einem Hauptrahmen eines Fahrzeugs montiert ist, das auf einer Bodenfläche verfahrbar ist. Der anhebbare Rahmen weist einen Drehtisch auf, auf den eine Schraubenmutter gelegt werden kann. die von unten auf einen herabhängenden Schraubenbolzen geschraubt werden soll.

Aufgabe der vorliegenden Erfindung ist es, eine Hebe- und Transportvorrichtung vorzuschlagen, mit der geschraubte Flanschverbindungen einfacher hergestellt werden können.

Erfindungsgemäß wird diese Aufgabe bei einer Vorrichtung der eingangs genannten Art durch die kennzeichnenden Merkmale des Anspruchs 1 gelöst.

Der Erfindung liegt die Erkenntnis zugrunde, dass die Herstellung vieler einzelner benachbarter Schraubverbindungen im Rahmen einer geschraubten Flanschverbindung - beispielsweise eines Ringflansches zur Verbindung zylindrischer Bauteile - schneller und leichter erfolgen kann, wenn die Schraubenbolzen von oben in die Durchgangsbohrungen der miteinander zu verbindenden Flansche gesteckt werden. Es ist dann einfacher, die Muttern von Hand auf die Schraubenbolzen aufzuschrauben, da die Schraubenbolzen mit ihrem Kopf sicher auf der Flansch-Oberseite aufliegen und nicht während des Aufschraubens der Mutter von unten gehalten werden müssen oder das Aufschrauben jeweils gegen das Eigengewicht des Schraubenbolzens erfolgen muss.

Durch die erfindungsgemäßen Maßnahmen können Werkzeuge zum Vorspannen von Schraubverbindungen bequem und schnell auf der Flansch-Unterseite mit einer Schraubverbindung in Eingriff gebracht werden, um diese vorzuspannen oder zu lösen, und anschließend zur nächsten Schraubverbindung weitertransportiert werden. Mit der vorgeschlagenen Hebe- und Transportvorrichtung kann ein Spannwerkzeug auf der Flansch-Unterseite nicht nur kurzfristig angehoben werden, sondern auch in der angehobenen Stellung auf leichte Weise gehalten werden. Dadurch, dass erfindungsgemäß die Hebe- und Transportvorrichtung an den miteinander zu verbindenden Flanschen gelagert ist und sich längs der Flansch-Oberseite und der Flansch-Stirnseite zur Flansch-Unterseite hin erstreckt - also am Flansch aufgehängt ist -, sind zum einen keine weiteren Bauteile zur Auflagerung notwendig - auch keine an die Flansche anschließenden Bauteilwände - und benötigt die Hebe- und Transportvorrichtung nur einen minimalen Platz vor den miteinander zu verbindenden Flanschen. Der Monteur kann somit aus der Arbeitsposition, in der er die Schraubenbolzen von oben in die Durchgangsbohrungen der Flansche einführt, auch die Hebe- und Transportvorrichtung an den Flanschen anbringen bzw. aufhängen. Darüber hinaus kann der Monteur aus dieser Arbeitsposition auch die Hebe- und Transportvorrichtung betätigen, d. h. das Spannwerkzeug aus der Transportstellung in die Spannstellung anheben und dort während des Vorspannens halten und nach Beendigung des Spannvorganges das Spannwerkzeug wieder in die Transportstellung absenken und zur nächsten Schraubverbindung weiterschieben. Dabei ist das Spannwerkzeug unter der Flansch-Unterseite mit nach oben gerichtetem Eingriffsmittel in der Halterungseinrichtung befestigt und von dieser gehaltert. Mit dem bzw. beim Anheben des Spannwerkzeuges in die Spannstellung wird es mit der vorzuspannenden Schraubverbindung in Eingriff gebracht. Vorhandene Arbeitsgerüste, Arbeitsbühnen oder Podeste müssen für die einzelnen Montageschritte nicht umgebaut werden.

Vorzugsweise weist die Hubeinrichtung eine Kraftverstärkungseinrichtung auf, um die Halterungseinrichtung mit daran befestigtem Spannwerkzeug von der Transport- in die Spannstellung anzuheben. Auf diese Weise wird der Einsatz von Muskelkraft des die Hebe- und Transportvorrichtung bedienenden Monteurs reduziert. Hierdurch kann der Monteur ohne fremde Hilfe auch schwere Spannwerkzeuge (z. B. für Schraubenbolzen M 64) beliebig oft in die Spannstellung anheben und dort beliebig lange halten und somit eine große Anzahl von Schraubverbindungen vorspannen, ohne zu ermüden.

Dabei weist die Kraftverstärkungseinrichtung bevorzugt mindestens einen Gasdruckzylinder auf. Die einzusetzende Muskelkraft wird hierdurch auf ein Minimum reduziert.

In einer anderen vorteilhaften Ausführungsform der Erfindung weist die Kraftverstärkungseinrichtung einen Flaschenzug auf. Dies ist eine äußerst kostengünstige Möglichkeit zur Kraftverstärkung.

In günstiger Weiterbildung der Erfindung weist die Hubeinrichtung einen Hebel auf, der am Rahmen um eine erste Verschwenkachse verschwenkbar befestigt ist, die senkrecht zur Heberichtung verläuft, mit einem ersten Hebelabschnitt, der sich von der ersten Verschwenkachse aus auf der Lastraumseite des Rahmens erstreckt und an dem die Halterungseinrichtung um eine zweite Verschwenkachse verschwenkbar ist, die zur ersten Verschwenkachse parallel verläuft, und mit einem zweiten Hebelabschnitt, der von der ersten Verschwenkachse aus sich vom Lastraum weg erstreckt und einen Handgriff zur Betätigung des Hebels aufweist. Mit diesen Maßnahmen kann die Hubeinrichtung konstruktiv einfach ausgebildet und auch sehr einfach betätigt werden. Ein Monteur muss nur den Hebel mittels des Handgriffs verschwenken, um das Spannwerkzeug anzuheben oder abzusenken.

Dabei steht der Hebel bevorzugt mit der Kraftverstärkungseinrichtung in Wirkeingriff. Auf diese Weise wird mit Betätigung des Hebels auch die Kraftverstärkungseinrichtung aktiviert.

Vorteilhafterweise erstreckt sich der Hebel senkrecht oder parallel zur Transportrichtung. Hierdurch kann eine Anpassung an die jeweiligen Platzverhältnisse erfolgen. Zudem wird die Geometrie und damit die Herstellung der Hubeinrichtung dadurch weiter vereinfacht.

In einer günstigen Ausgestaltung der Erfindung weist der Rahmen zwei gleiche Rahmenteile auf, die in Transportrichtung vor und hinter dem Lastraum angeordnet sind. Mit diesen Maßnahmen ist der Lastraum von vorne oder von unten zugänglich, sodass beispielsweise ein Spannwerkzeug auf seiner Vorder- und/oder Unterseite an eine Steuereinrichtung oder Versorgungseinrichtung angeschlossen werden kann und die Anschlussleitungen zwischen den beiden Rahmenteilen aus dem Lastraum heraus- bzw. in diesen hineingeführt werden.

Vorzugsweise weist jedes Auflager zwei Gleitelemente oder zwei Rollen auf, die in Transportrichtung vor oder hinter dem Lastraum angeordnet sind. Hierdurch wird die Kippgefahr in Transportrichtung erheblich verringert. Zudem können die einzelnen Gleitelemente oder Rollen geringer dimensioniert werden.

In einer bevorzugten Ausführungsform ist das zweite Auflager zur Anlage an der Flansch-Stirnseite ausgelegt und verlaufen die Auflagerichtungen senkrecht zueinander. Diese Ausführungsform ermöglicht auf einfache Weise ein geführtes horizontales Versetzen des Spannwerkzeuges, da die Flansch-Stirnseite üblicherweise senkrecht zur Flansch-Oberseite verläuft und für das zweite, an der Flansch-Stirnseite anliegende Auflager in horizontaler Richtung eine Führungsbahn bildet.

Dabei ist das zweite Auflager vorzugsweise in der unteren Hälfte der Flansch-Stirnseite angeordnet. Hierdurch wird die Kippstabilität der Hebe- und Transportvorrichtung senkrecht zur Transportrichtung erhöht, da der Abstand zwischen dem ersten Auflager auf der Flansch-Oberseite und dem zweiten Auflager an der Flansch-Stirnseite möglichst groß ausgelegt ist und somit ein möglichst großes Kippmoment aufgenommen werden kann.

in einer weiteren vorteilhaften Ausführungsform der Erfindung ist das erste Auflager zur Anlage an der Flansch-Oberseite zwischen Schraubverbindung und Flanschkante ausgelegt. Mit dieser Maßnahme kann die Hebe- und Transportvorrichtung von der Flansch-Stirnseite aus leicht an der Flansch-Oberseite aufgehängt werden. Das Spannwerkzeug wird dann an der Halterungseinrichtung unter dem Flansch befestigt und kann dort verbleiben, bis sämtliche Schraubverbindungen der Flanschverbindung vorgespannt sind.

Vorzugsweise weist die Hebe- und Transportvorrichtung eine Arretiervorrichtung auf, mit der die Halterungseinrichtung in der Spannstellung arretierbar ist. Hierdurch wird bei reinem muskelbetriebenen Anheben der Halterungseinrichtung und des daran befestigten Spannwerkzeugs die Handhabung der Hebe- und Transportvorrichtung während des Spannvorganges erheblich erleichtert. Insbesondere gilt dies bei Drehmomentschraubern oder Drehschraubern, da diese nicht wie Schraubenspannzylinder auf die vorzuspannende Schraube aufgeschraubt werden. Sind Kraftverstärkungseinrichtungen vorhanden, stellt eine solche Arretiervorrichtung eine Sicherheitseinrichtung dar für den Fall, dass die Kraftverstärkungseinrichtung während des Spannvorganges ausfällt.

In günstiger Ausgestaltung der Erfindung weist der Rahmen ein drittes Auflager zur Ableitung horizontaler, quer zur Transportrichtung bzw. zur Flansch-Stirnseite wirkender Kräfte in die Flansch-Oberseite und/oder -Unterseite auf. Mit diesen Maßnahmen wird ein Abkippen oder Abrutschen der Hebe- und Transportvorrichtung von der Flansch-Oberseite sicher verhindert.

Dabei ist das dritte Auflager bevorzugt in Transportrichtung vor und hinter dem Lastraum angeordnet und am Rahmen befestigt und zum Hintergreifen der Schraubverbindungen ausgebildet, die der vorzuspannenden Schraubverbindung benachbart sind. Mit diesen Maßnahmen kann das dritte Auflager auf konstruktiv einfache und kostengünstige Weise realisiert werden.

Die Erfindung wird nachfolgend anhand der Zeichnungen beispielshalber noch näher erläutert. Es zeigen:
- Figur 1: in einer Perspektivansicht eine erste Ausführungsform einer erfindungsgemäßen Hebe-und Transportvorrichtung;
- Figur 2: eine Vorderansicht der Hebe- und Transportvorrichtung aus Figur 1;
- Figur 3: eine Seitenansicht der Hebe- und Transportvorrichtung aus Figur 1;
- Figur 4: in einer Perspektivansicht die Hebe- und Transportvorrichtung aus Figur 1, eingesetzt beim Herstellen einer geschraubten Flanschverbindung mit einem Schraubenspannzylinder und
- Figur 5: eine Seitenansicht zur Perspektivansicht in Figur 4, wobei der Schraubenspannzylinder mit einem Handgriff versehen ist.

Die in den Figuren dargestellte Ausführungsform einer erfindungsgemäßen Hebe- und Transportvorrichtung 1 weist einen Rahmen 2, eine Halterungseinrichtung 3, eine Hubeinrichtung 4 sowie erste, zweite und dritte Auflager 5, 6, 7 auf. Die Heberichtung ist mit 8 und die Transportrichtung mit 9 bezeichnet.

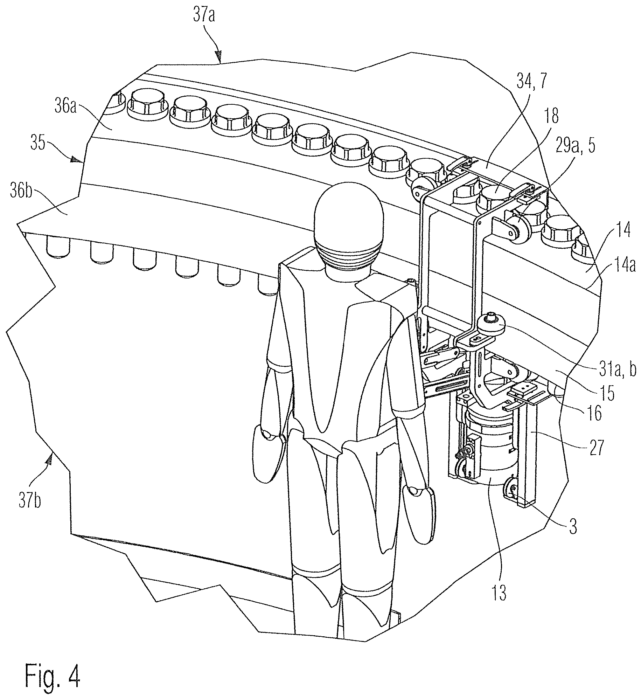

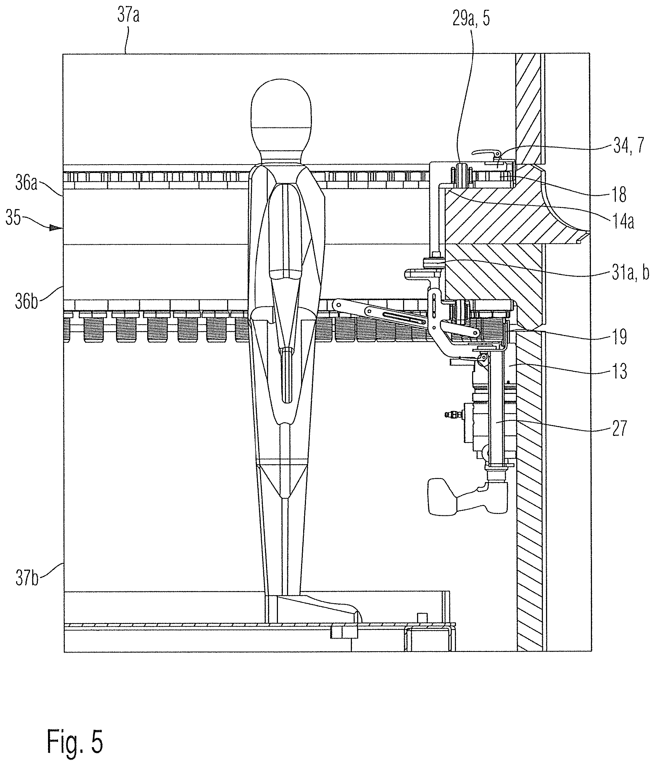

Der Rahmen 2 ist aus zwei Rahmenteilen 10, 11 gebildet, die in Transportrichtung 9 vor und hinter einem Lastraum 12, der zur Aufnahme eines Spannwerkzeuges 13 ausgelegt ist, angeordnet sind und sich senkrecht zur Transportrichtung 9 von der Flansch-Oberseite 14 aus längs der Flansch-Stirnseite 15 bis unter die Flansch-Unterseite 16 erstrecken. Die Rahmenteile 10, 11 sind durch in Transportrichtung 9 verlaufende Querriegel 17 verformungssteif miteinander verbunden. Der lichte Abstand zwischen den unter der Flansch-Unterseite 16 angeordneten Abschnitten 10c, 11c der Rahmenteile 10, 11 ist im dargestellten Ausführungsbeispiel zur Aufnahme eines Schraubenspannzylinders 13 ausgelegt (Figuren 4 und 5), der zum Spannen einer Schraubverbindung 18 mit dieser in Eingriff bringbar ist. An diesen Rahmenabschnitten 10c, 11c ist die Halterungseinrichtung 3 für den Schraubenspannzylinder 13 vertikal beweglich befestigt.

Die Erfindung wird zwar hier anhand des Einsatzes zusammen mit einem Schraubenspannzylinder 13 beschrieben. Durch einfache konstruktive Änderungen an der Halterungseinrichtung 3 ist eine erfindungsgemäße Hebe- und Transportvorrichtung 1 jedoch auch für jedes andere automatische oder manuelle Spannwerkzeug einsetzbar.

Der Schraubenspannzylinder bzw. jedes Spannwerkzeug 13 ist so in der Halterungseinrichtung 3 ausgerichtet, dass die Mittel 19, die mit der Schraubverbindung 18 zum Vorspannen in Eingriff kommen sollen, nach oben gerichtet sind, d. h. der Schraubverbindung 18 zugewandt sind, sodass durch Nachobenfahren der Halterungseinrichtung 3 die Eingriffsmittel 19 des Spannwerkzeuges 13 mit der vorzuspannenden Schraubverbindung 18 in Eingriff bringbar sind.

An den sich längs der Flansch-Stirnseite erstreckenden Rahmenabschnitten 10b, 11b ist als Hubeinrichtung 4 ein Hebel 20 um eine erste Verschwenkachse 21 gelenkig gelagert, die sich in Transportrichtung 9 erstreckt. Der Hebel 20 ist U-förmig ausgebildet, wobei die Schenkel 22 des U sich senkrecht zur Transportrichtung 9 erstrecken und jeweils an einem der beiden Rahmenabschnitte 10b, 11b mittels eines ersten Verschwenklagers 23 befestigt sind. Die Basis des U bildet einen Griff 24, mit dem der Hebel 20 betätigbar ist.

Jeder Schenkel 22 des U weist einen ersten Hebelabschnitt 20a auf, der sich vom Verschwenklager 23 zur Lastraumseite hin erstreckt, und einen zweiten Hebelabschnitt 20b auf, der sich vom Verschwenklager 23 aus zur dem Lastraum 12 abgewandten Seite hin erstreckt und an dessen freien Ende der Griff 24 befestigt ist.

An den freien Enden der ersten Hebelabschnitte 20a ist jeweils die Halterungseinrichtung 3 mittels eines zweiten Verschwenklagers 25 gelenkig gelagert, dessen (zweite) Verschwenkachse 26 zur ersten Verschwenkachse 21 parallel verläuft.

Die Hubeinrichtung 4 weist im dargestellten Ausführungsbeispiel ferner zwei Gasdruckzylinder 27 auf, die in Transportrichtung 9 vor und hinter dem Lastraum 12 angeordnet sind und von denen jeweils einer an einem der Rahmenabschnitte 10c, 11c unter der Flansch-Unterseite 16 befestigt ist. Die Gasdruckzylinder 27 verlaufen vertikal und erstrecken sich über das untere Ende der besagten Rahmenabschnitte 10c, 11c nach unten hinaus. Sie sind mit ihrem freien, verschiebbaren Ende 28 mit der Halterungseinrichtung 3 verbunden, sodass durch vertikales Verschieben dieses Endes 28 der beiden Gasdruckzylinder 27 die Halterungseinrichtung 3 mit dem daran befestigten Spannwerkzeug 13 vertikal nach oben oder unten verfahrbar ist.

Die Gasdruckzylinder 27 stehen mit dem Hebel 20 in Wirkverbindung, sodass durch entsprechendes Betätigen des Hebels 20 die Gasdruckzylinder 27 aktiviert werden und die Halterungseinrichtung 3 mit dem an ihr befestigten Spannwerkzeug 13 in die Spannstellung anheben oder in die Transportstellung absenken.

Beispielsweise können die Gasdruckzylinder 27 in der abgesenkten Transportstellung vorgespannt sein, wobei die Vorspannkraft nach oben, d. h. in Heberichtung 8, gerichtet und so ausgelegt ist, dass sie das Spannwerkzeug 13 einschließlich der Halterungseinrichtung 3 von der Transportstellung in die Spannstellung anheben können. Das Absenken von der Spann- in die Transportstellung und damit das Vorspannen der Gasdruckzylinder 27 kann dann z. B. manuell durch Herunterdrücken mittels des Hebels 20 erfolgen.

Dabei ist es denkbar, die Gasdruckzylinder 27 in der Transportstellung zu verriegeln und zum Anheben zu entriegeln, z. B. mit Hilfe des Hebels 20.

An den beiden Rahmenabschnitten 10a, 11a, die sich längs der Flansch-Oberseite 14 erstrecken, ist jeweils eine erste Laufrolle 29 um eine Drehachse 30 drehbar gelagert, die sich parallel zur Flansch-Oberseite 14 bzw. horizontal und senkrecht zur Transportrichtung 9 erstreckt. Gemeinsam bilden die beiden ersten Laufrollen 29 ein erstes Laufrollenpaar 29a aus, das seinerseits das erste Auflager 5 für den Rahmen 2 bildet.

An den beiden Rahmenabschnitten 10b, 11b, die sich längs der Flansch-Stirnseite 15 erstrecken, ist jeweils eine zweite Laufrolle 31 um eine Drehachse 32 drehbar gelagert, die parallel zur Flansch-Stirnseite 15 bzw. vertikal und senkrecht zur Transportrichtung 9 verläuft. Gemeinsam bilden diese beiden Laufrollen 31 ein zweites Laufrollenpaar 31a aus, das seinerseits das zweite Auflager 6 ausbildet.

An den vor der Flansch-Stirnseite 15 verlaufenden Rahmenabschnitten 10b, 11b sind noch zwei Verstelleinrichtungen 33 für die zweiten Laufrollen 31 angebracht, an denen diese Laufrollen 31 befestigt sind und mittels denen diese Laufrollen 31 zum horizontalen Anlegen an die Flansch-Stirnseite 15 verschiebbar sind.

An den Rahmenabschnitten 10a, 11a, 10c, 11c, die sich längs der Flansch-Oberseite 14 und längs und unter der Flansch-Unterseite 16 erstrecken, ist jeweils noch ein rechtwinklig gebogenes Blech 34 befestigt, das zum Hintergreifen einer Schraubverbindung ausgelegt ist, die der vorzuspannenden Schraubverbindung 18 benachbart ist. Diese Winkelbleche 34 bilden gemeinsam das dritte Auflager 7, das eventuelle horizontal senkrecht zur Transportrichtung 9 wirkende Kräfte über die benachbarten Schraubverbindungen in die Flansche einleitet und so ein Abrutschen der Hebe- und Transportvorrichtung 1 von den Flanschen ausschließt.

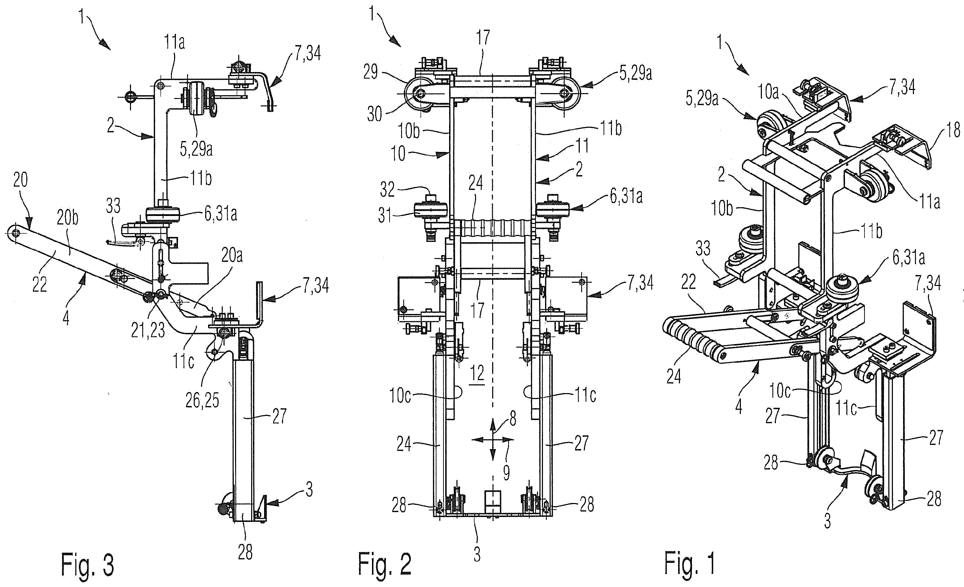

In den Figuren 4 und 5 ist die Hebe- und Transportvorrichtung 1 aus den Figuren 1 bis 3 im Einsatz bei der Herstellung einer geschraubten Flanschverbindung 35 dargestellt. Im dargestellten Anwendungsbeispiel sollen die Flansche 36a, 36b zweier zylindrischer Bauteile 37a, 37b, die stumpf miteinander gestoßen werden sollen, miteinander verschraubt werden. Das erste Laufrollenpaar 29a liegt auf der Flansch-Oberseite 14 zwischen den Schraubverbindungen und Flanschkante 14a an und das zweite Laufrollenpaar 31a liegt in der unteren Hälfte der Flansch-Stirnseite 15 an. Die Winkelbleche 34 des dritten Auflagers 7 hintergreifen an der Flansch-Oberseite 14 und an der Flansch-Unterseite 16 die Schraubverbindungen, die neben der vorzuspannenden Schraubverbindung 18 liegen. Unter der Flansch-Unterseite 16 ist als Spannwerkzeug ein Schraubenspannzylinder 13 in der Halterungseinrichtung 3 mit nach oben gerichtetem Eingriffsmittel 19 befestigt. Mit dem Hebel 20 kann nun die Halterungseinrichtung 3 mit dem daran befestigten Spannwerkzeug 13 in die Spannstellung angehoben werden - d. h. so weit angehoben werden, dass das Eingriffsmittel 19 mit der vorzuspannenden Schraubverbindung 18 in Eingriff kommt bzw. gebracht werden kann - und auch in der Spannstellung während des Spannvorganges gehalten werden. Mit dem Betätigen des Hebels 20 werden auch die beiden Gasdruckzylinder 27 aktiviert, die den Hubvorgang durch ihre Vorspannkraft unterstützen.

Nach der Beendigung des Spannvorganges wird das Spannwerkzeug 13 von der Schraubverbindung 18 gelöst. Mit einer Betätigung des Hebels 20 in Richtung Absenken des Spannwerkzeuges 13 werden die Gasdruckzylinder 27 wieder vorgespannt und die Halterungseinrichtung 3 und das an ihr befestigte Spannwerkzeug 13 so weit abgesenkt, dass die Oberkante des Spannwerkzeuges 13 unterhalb des Bolzenendes der Schraubverbindung 18 liegt. Die Hebe- und Transportvorrichtung 1 und mit ihr das Spannwerkzeug 13 kann nun frei zur nächsten vorzuspannenden Schraubverbindung 18 verschoben bzw. gerollt werden. Dort kann das Spannwerkzeug 13 mit der Schraubverbindung 18 in Eingriff gebracht werden, indem der Hebel 20 wieder entsprechend betätigt wird.

## Patentansprüche

1. Hebe- und Transportvorrichtung zum Heben einer Last und deren Transport quer zur Heberichtung (8), zur Verwendung beim Herstellen einer geschraubten Flanschverbindung (35), um ein Spannwerkzeug (13) in eine Spannstellung zu bringen, in der es mit einer vorzuspannenden Schraubverbindung (18) in Eingriff steht, oder in eine Transportstellung, in der es außer Eingriff mit einer Schraubverbindung (18) und zur nächsten Schraubverbindung transportierbar ist, wobei der Flansch (36a, 36b) sich horizontal erstreckt, mit
einem Rahmen (2), der sich zur Aufnahme und zum Heben einer Last um einen Lastraum (12) vorgegebener Größe herum erstreckt,
einer Halterungseinrichtung (3) zur Halterung der Last, wobei die Halterungseinrichtung (3) in Heberichtung (8) relativ zum Rahmen (2) bewegbar ist, und mit
einer Hubeinrichtung (4), die neben dem Lastraum (12) an dem Rahmen (2) befestigt ist, einen sich auf dessen Lastraumseite erstreckenden Abschnitt (20a) aufweist, an dem die Halterungseinrichtung (3) befestigt ist, und die zum Heben und Senken der Halterungseinrichtung (3) mit daran befestigter Last eingerichtet ist,
wobei der Rahmen (2) auf einem ersten und einem zweiten Auflager (5, 6) gelagert ist, deren Auflagerichtungen jeweils senkrecht zur Transportrichtung (9) verlaufen und die senkrecht zur Transportrichtung (9) zueinander einen Abstand aufweisen, wobei das erste Auflager (5) zur Anlage an der Flansch-Oberseite (14) ausgelegt ist, und
wobei die Auflager (5, 6) Gleitelemente oder Rollen (29, 31) aufweisen, die in Transportrichtung (9) verschiebbar bzw. abrollbar sind,
**dadurch gekennzeichnet, dass**
der Rahmen (2) dazu ausgelegt ist, sich von der Flansch-Oberseite (14) längs der Flansch-Stirnseite (15) bis unter die Flansch-Unterseite (16) zu erstrecken,
das zweite Auflager (6) zur Anlage an der Flansch-Oberseite (14) oder an der Flansch-Stirnseite (15) ausgelegt ist,
die Halterungseinrichtung (3) dazu eingerichtet ist, das Spannwerkzeug (13) mit nach oben gerichtetem Eingriffsmittel (19) unter der Flansch-Unterseite (16) zu haltern, und
die Hubeinrichtung (4) dazu eingerichtet ist, die Halterungseinrichtung (3) mit daran befestigtem Spannwerkzeug (13) von einer abgesenkten Transportstellung in eine Spannstellung anzuheben.

2. Hebe- und Transportvorrichtung nach Anspruch 1, **dadurch gekennzeichnet, dass** die Hubeinrichtung (4) eine Kraftverstärkungseinrichtung (27) aufweist, um die Halterungseinrichtung (3) mit daran befestigtem Spannwerkzeug (13) von der Transport- in die Spannstellung anzuheben.

3. Hebe- und Transportvorrichtung nach Anspruch 2, **dadurch gekennzeichnet, dass** die Kraftverstärkungseinrichtung mindestens einen Gasdruckzylinder (27) aufweist.

4. Hebe- und Transportvorrichtung nach Anspruch 2, **dadurch gekennzeichnet, dass** die Kraftverstärkungseinrichtung einen Flaschenzug aufweist.

5. Hebe- und Transportvorrichtung nach einem der vorstehenden Ansprüche, **dadurch gekennzeichnet, dass** die Hubeinrichtung (4) einen Hebel (20) aufweist, der am Rahmen (2) um eine erste Verschwenkachse (21) verschwenkbar befestigt ist, die senkrecht zur Heberichtung (8) verläuft, mit einem ersten Hebelabschnitt (20a), der sich von der ersten Verschwenkachse (21) aus auf der Lastraumseite des Rahmens (2) erstreckt und an dem die Halterungseinrichtung (3) um eine zweite Verschwenkachse (26) verschwenkbar befestigt ist, die zur ersten Verschwenkachse (21) parallel verläuft, und mit einem zweiten Hebelabschnitt (20b), der von der ersten Verschwenkachse (21) aus sich vom Lastraum (12) wegerstreckt und einen Handgriff (24) zur Betätigung des Hebels (20) aufweist.

6. Hebe- und Transportvorrichtung nach Anspruch 5, **dadurch gekennzeichnet, dass** der Hebel (20) mit der Kraftverstärkungseinrichtung (27) in Wirkeingriff steht.

7. Hebe- und Transportvorrichtung nach Anspruch 5 oder 6, **dadurch gekennzeichnet, dass** der Hebel (20) sich senkrecht oder parallel zur Transportrichtung (9) erstreckt.

8. Hebe- und Transportvorrichtung nach einem der vorstehenden Ansprüche, **dadurch gekennzeichnet, dass** der Rahmen (2) zwei gleiche Rahmenteile (10, 11) aufweist, die in Transportrichtung (9) vor und hinter dem Lastraum (12) angeordnet sind.

9. Hebe- und Transportvorrichtung nach einem der vorstehenden Ansprüche, **dadurch gekennzeichnet, dass** jedes Auflager (5, 6) zwei Gleitelemente oder zwei Rollen (29, 31) aufweist, die in Transportrichtung (9) vor und hinter dem Lastraum (12) angeordnet sind.

10. Hebe- und Transportvorrichtung nach einem der vorstehenden Ansprüche, **dadurch gekennzeichnet, dass** das zweite Auflager (6) zur Anlage an der Flansch-Stirnseite (15) ausgelegt ist und die Auflagerichtungen senkrecht zueinander verlaufen.

11. Hebe- und Transportvorrichtung nach Anspruch 10, **dadurch gekennzeichnet, dass** das zweite Auflager (6) in der unteren Hälfte der Flansch-Stirnseite (15) angeordnet ist.

12. Hebe- und Transportvorrichtung nach einem der vorstehenden Ansprüche, **dadurch gekennzeichnet, dass** das erste Auflager (5) zur Anlage an der Flansch-Oberseite (14) zwischen Schraubverbindung (18) und Flanschkante (14a) ausgelegt ist.

13. Hebe- und Transportvorrichtung nach einem der vorstehenden Ansprüche, **gekennzeichnet durch** eine Arretiervorrichtung, mit der die Halterungseinrichtung (3) in der Spannstellung arretierbar ist.

14. Hebe- und Transportvorrichtung nach einem der vorstehenden Ansprüche, **dadurch gekennzeichnet, dass** der Rahmen (2) ein drittes Auflager (7) zur Ableitung horizontaler, senkrecht zur Transportrichtung (9) wirkender Kräfte in die Flansch-Oberseite (14) und/oder -Unterseite (16) aufweist.

15. Hebe- und Transportvorrichtung nach Anspruch 14, **dadurch gekennzeichnet, dass** das dritte Auflager (7) in Transportrichtung (9) vor und hinter dem Lastraum (12) angeordnet und am Rahmen (2) befestigt ist und zum Hintergreifen der benachbarten Schraubverbindungen ausgebildet ist.

## Claims

1. A lifting and transporting device for lifting a load and for transporting the same transversely to the lifting direction (8), for use in the production of a screwed flange connection (35) in order to bring a tensioning tool (13) into a tensioning position in which it is in engagement with a screw bolt connection (18) to be pretensioned, or into a transport position in which it is out of engagement with a screw bolt connection (18) and can be transported to the next screw bolt connection, wherein the flange (36a, 36b) extends horizontally, comprising
a frame (2) which for picking up and lifting a load extends around a load space (12) of specified size,
a holding device (3) for holding the load, wherein the holding device (3) is movable in a lifting direction (8) relative to the frame (2), and comprising
a hoisting device (4) which is attached to the frame (2) beside the load space (12), includes a portion (20a) extending on the load space side of said frame, to which the holding device (3) is attached, and which is equipped for lifting and lowering the holding device (3) with a load attached thereto,
wherein the frame (2) is mounted on a first and a second support bearing (5, 6) whose support directions each extend perpendicularly to the transport direction (9) and which have a distance to each other perpendicularly to the transport direction (9), wherein the first support bearing (5) is designed for abutment against the flange upper side (14), and
wherein the support bearings (5, 6) include sliding members or rollers (29, 31) which can be shifted or rolled off in the transport direction (9),
**characterized in that**
the frame (2) is designed to extend from the flange upper side (14) along the flange face (15) to below the flange underside (16),
the second support bearing (6) is designed for abutment against the flange upper side (14) or against the flange face (15),
the holding device (3) is equipped to hold the tensioning tool (13) below the flange underside (16) with the engaging means (19) directed upwards, and
the hoisting device (4) is equipped to lift the holding device (3) with the tensioning tool (13) attached thereto from a lowered transport position into a tensioning position.

2. The lifting and transporting device according to claim 1, **characterized in that** the hoisting device (4) includes a force amplification device (27) in order to lift the holding device (3) with the tensioning tool (13) attached thereto from the transport position into the tensioning position.

3. The lifting and transporting device according to claim 2, **characterized in that** the force amplification device includes at least one gas pressure cylinder (27).

4. The lifting and transporting device according to claim 2, **characterized in that** the force amplification device includes a block and tackle.

5. The lifting and transporting device according to any of the preceding claims, **characterized in that** the hoisting device (4) includes a lever (20) which is pivotally attached to the frame (2) about a first pivot axis (21) which extends perpendicularly to the lifting direction (8), with a first lever portion (20a) which extends from the first pivot axis (21) on the load space side of the frame (2) and to which the holding device (3) is pivotally attached about a second pivot axis (26) which extends parallel to the first pivot axis (21), and with a second lever portion (20b) which proceeding from the first pivot axis (21) extends away from the load space (12) and includes a handle (24) for actuating the lever (20).

6. The lifting and transporting device according to claim 5, **characterized in that** the lever (20) is operatively engaged with the force amplification device (27).

7. The lifting and transporting device according to claim 5 or 6, **characterized in that** the lever (20) extends perpendicularly or parallel to the transport direction (9).

8. The lifting and transporting device according to any of the preceding claims, **characterized in that** the frame (2) includes two identical frame parts (10, 11) which are arranged in front of and behind the load space (12) in the transport direction (9).

9. The lifting and transporting device according to any of the preceding claims, **characterized in that** each support bearing (5, 6) includes two sliding members or two rollers (29, 31) which are arranged in front of and behind the load space (12) in the transport direction (9).

10. The lifting and transporting device according to any of the preceding claims, **characterized in that** the second support bearing (6) is designed for abutment against the flange face (15) and the support directions extend perpendicularly to each other.

11. The lifting and transporting device according to claim 10, **characterized in that** the second support bearing (6) is arranged in the lower half of the flange face (15).

12. The lifting and transporting device according to any of the preceding claims, **characterized in that** the first support bearing (5) is designed for abutment against the flange upper side (14) between the screw bolt connection (18) and the flange edge (14a).

13. The lifting and transporting device according to any of the preceding claims, **characterized by** an arresting device by means of which the holding device (3) can be arrested in the tensioning position.

14. The lifting and transporting device according to any of the preceding claims, **characterized in that** the frame (2) includes a third support bearing (7) for dissipating horizontal forces acting perpendicularly to the transport direction (9) into the flange upper side (14) and/or flange underside (16).

15. The lifting and transporting device according to claim 14, **characterized in that** the third support bearing (7) is arranged in front of and behind the load space (12) in the transport direction (9) and is attached to the frame (2) and configured to engage behind the adjacent screw bolt connections.

## Revendications

1. Dispositif de levage et de transport pour lever une charge et pour la transporter transversalement à la direction de levage (8), destiné à être utilisé dans la réalisation d'un assemblage à bride vissé (35), afin d'amener un outil de serrage (13) dans une position de serrage dans laquelle il est en prise avec un assemblage vissé (18) à précontraindre, ou dans une position de transport dans laquelle il est hors de prise avec un assemblage vissé (18) et peut être transporté jusqu'à l'assemblage vissé suivant, la bride (36a, 36b) s'étendant horizontalement, comprenant
un cadre (2) qui s'étend autour d'un espace de charge (12) de taille prédéterminée, afin de recevoir et de lever une charge,
un moyen de retenue (3) pour retenir la charge, le moyen de retenue (3) étant mobile par rapport au cadre (2) dans la direction de levage (8), et comprenant
un moyen de levage (4) qui est fixé au cadre (2) à côté de l'espace de charge (12), qui présente une portion (20a) s'étendant sur son côté tourné vers l'espace de charge, sur laquelle le moyen de retenue (3) est fixé, et qui est conçu pour lever et abaisser le moyen de retenue (3) avec la charge fixée sur celui-ci,
le cadre (2) étant monté sur un premier et sur un second support (5, 6), dont les directions de support s'étendent chacune perpendiculairement à la direction de transport (9) et qui présentent une distance l'un de l'autre perpendiculairement à la direction de transport (9), le premier support (5) étant conçu pour s'appuyer sur la face supérieure de bride (14), et
les supports (5, 6) présentant des éléments coulissants ou des rouleaux (29, 31) capables de coulisser ou de rouler dans la direction de transport (9),
**caractérisé en ce que**
le cadre (2) est adapté pour s'étendre depuis la face supérieure de bride (14) le long de la face frontale de bride (15) jusqu'en dessous de la face inférieure de bride (16),
le second support (6) est conçu pour s'appuyer sur la face supérieure de bride (14) ou sur la face frontale de bride (15),
le moyen de retenue (3) est adapté pour retenir l'outil de serrage (13) avec un moyen d'engagement (19) dirigé vers le haut sous la face inférieure de bride (16), et
le moyen de levage (4) est adapté pour soulever le moyen de retenue (3) avec l'outil de serrage (13) fixé sur celui-ci depuis une position de transport abaissée jusque dans une position de serrage.

2. Dispositif de levage et de transport selon la revendication 1,
**caractérisé en ce que** le moyen de retenue (4) présente un moyen d'amplification de force (27), afin de pour soulever le moyen de retenue (3) avec l'outil de serrage (13) fixé sur celui-ci depuis la position de transport jusque dans la position de serrage.

3. Dispositif de levage et de transport selon la revendication 2,
**caractérisé en ce que** le moyen d'amplification de force comporte au moins un vérin à gaz (27).

4. Dispositif de levage et de transport selon la revendication 2,
**caractérisé en ce que** le moyen d'amplification de force comporte un palan.

5. Dispositif de levage et de transport selon l'une des revendications précédentes,
**caractérisé en ce que** le moyen de levage (4) comprend un levier (20) qui est fixé au cadre (2) de manière à pouvoir pivoter autour d'un premier axe de pivotement (21) qui s'étend perpendiculairement à la direction de levage (8), comportant une première portion de levier (20a) qui s'étend depuis le premier axe de pivotement (21) sur le côté du cadre (2) tourné vers l'espace de charge, et sur lequel le moyen de retenue (3) est fixé de manière à pouvoir pivoter autour d'un second axe de pivotement (26) qui est parallèle au premier axe de pivotement (21), et comportant une seconde portion de levier (20b) qui s'étend depuis le premier axe de pivotement (21) en s'éloignant de l'espace de charge (12) et qui présente une poignée à main (24) pour actionner le levier (20).

6. Dispositif de levage et de transport selon la revendication 5,
**caractérisé en ce que** le levier (20) est en prise active avec le moyen d'amplification de force (27).

7. Dispositif de levage et de transport selon la revendication 5 ou 6,
**caractérisé en ce que** le levier (20) s'étend perpendiculairement ou parallèlement à la direction de transport (9).

8. Dispositif de levage et de transport selon l'une des revendications précédentes,
**caractérisé en ce que** le cadre (2) comporte deux parties de cadre (10, 11) identiques, qui sont disposées en amont et en aval de l'espace de charge (12) dans la direction de transport (9).

9. Dispositif de levage et de transport selon l'une des revendications précédentes,
**caractérisé en ce que** chaque support (5, 6) comporte deux éléments de coulissement ou deux rouleaux (29, 31) qui sont disposés en amont et en aval de l'espace de charge (12) dans la direction de transport (9).

10. Dispositif de levage et de transport selon l'une des revendications précédentes,
**caractérisé en ce que** le second support (6) est conçu pour s'appuyer contre la face frontale de bride (15), et les directions de support sont perpendiculaires l'une à l'autre.

11. Dispositif de levage et de transport selon la revendication 10,
**caractérisé en ce que** le second support (6) est disposé dans la moitié inférieure de la face frontale de bride (15).

12. Dispositif de levage et de transport selon l'une des revendications précédentes,
**caractérisé en ce que** le premier support (5) est conçu pour s'appuyer sur la face supérieure de bride (14) entre l'assemblage vissé (18) et le bord de bride (14a).

13. Dispositif de levage et de transport selon l'une des revendications précédentes,
**caractérisé par** un dispositif de blocage permettant de bloquer le moyen de retenue (3) dans la position de serrage.

14. Dispositif de levage et de transport selon l'une des revendications précédentes,
**caractérisé en ce que** le cadre (2) comprend un troisième support (7) pour la dérivation des forces horizontales, agissant transversalement à la direction de transport (9), vers la face supérieure (14) et/ou inférieure (16) de la bride.

15. Dispositif de levage et de transport selon la revendication 14,
**caractérisé en ce que** le troisième support (7) est disposé en amont et en aval de l'espace de charge (12) dans la direction de transport (9) et est fixé au cadre (2) et est conçu pour engager par l'arrière les assemblages vissés voisins.
